# EUROPÄISCHE PATENTSCHRIFT

(11) **EP 0 966 634 B1**
(45) Veröffentlichungstag und Bekanntmachung des Hinweises auf die Patenterteilung: **26.06.2002**
(21) Anmeldenummer: 98904336.9
(22) Anmeldetag: 09.03.1998
(51) Int. Cl.: F21S 9/02

(54) **SICHERHEITS- UND MODESOLARLEUCHTE OHNE EXTERNE STROMQUELLE**
SECURITY AND FASHION SOLAR LAMPS WITHOUT EXTRANEOUS CURRENT SOURCE
ECLAIRAGES SOLAIRES POUR LA MODE ET LA SECURITE SANS SOURCE DE COURANT EXTERNE

(30) Priorität: 13.03.1997 CH 60097
(43) Veröffentlichungstag der Anmeldung: 29.12.1999
(73) Patentinhaber: Gähwiler, Benno, 8580 Amriswil (CH); Balmer, Gertrud, 8598 Bottinghofen (CH)
(72) Erfinder: Gähwiler, Benno, 8580 Amriswil (CH)
(74) Vertreter: Frank, Gerhard, Dipl.-Phys.
(86) Internationale Anmeldenummer: IB9800305
(87) Internationale Veröffentlichungsnummer: WO9840663

(56) Entgegenhaltungen:
- DE-A- 19 504 096
- DE-A- 19 511 813
- DE-U- 9 116 123
- GB-A- 2 253 129
- US-A- 4 827 534
- US-A- 4 875 144
- US-A- 5 111 366
- US-A- 5 249 106
- US-A- 5 276 424

## Beschreibung

### Technischer Hintergrund

Die Erfindung bezieht sich auf eine Leuchte basierend auf einer solarbetriebenen und dadurch von externen Stromquellen unabhängigen Einrichtung, die bei Dunkelheit aktivierbar ist und die Sichtbarkeit und damit die Sicherheit erhöht.

### Stand der Technik

Leuchten, die von einem elektrischen Akkumulator gespeist werden, der seinerseits über Solarzellen geladen wird und die bei Dunkelheit aktiviert werden, sind aus der DE 195 11 813 A1 bekannt. Hierbei werden die vom Akkumulator gespeisten Lichtquellen und die Solarzellen auf der Oberfläche eines Markierungselementes für Verkehrsflächen eingesetzt. Es handelt sich bei diesem Markierungselement um ein starres, großflächiges Bauteil, das nur für den dargestellten Anwendungszweck geeignet ist.

### Darstellung der Erfindung

Aufgabe der Erfindung ist es, diese Technik auch anderen Anwendungsbereichen verfügbar zu machen, bei denen es insbesondere um erhöhte Sicherheitsanforderungen geht, aber auch zu dekorativen Zwecken.

Diese Aufgabe wird durch die Merkmale gemäß Patentanspruch 1 gelöst.

### Beschreibung des Ausführungsbeispiels

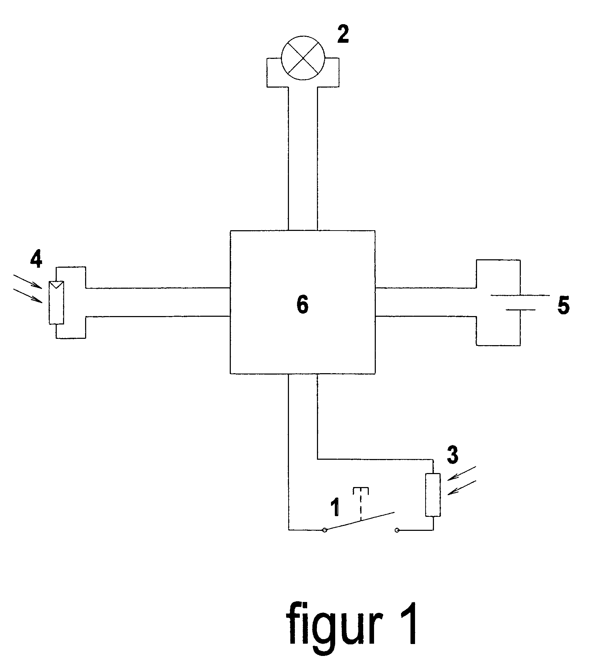

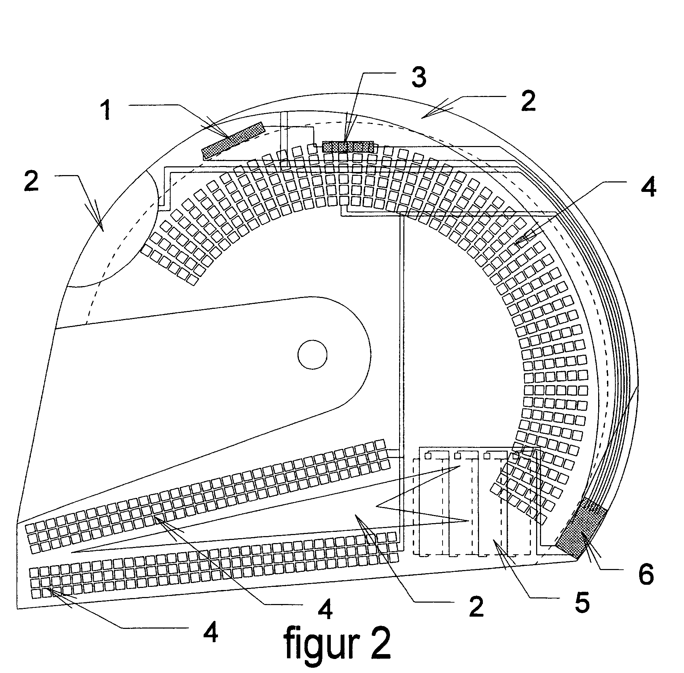

Die Figur 1 zeigt einen Schaltplan und die Figur 2 eine Seitenansicht eines Gegenstands mit einer aufgebrachten erfindungsgemäßen Sicherheits- und Modesolarleuchte.

Die Sicherheits- und Modesolarleuchte beinhaltet Solarzellen 4, die auf eine bewegliche Folie aufgezogen werden. Dieses Solarzellenlaminat 4 dient zur Stromerzeugung und zur Speisung der Akkumulatoren 5, die ebenfalls je nach Verwendungszweck zu größeren oder kleineren Akku-Packs 5 gebunden werden. Eine Steuerungselektronik 6 reguliert die Lade- und Entladevorgänge der Akkumulatoren 5. Ein Schnappschalter oder Taster 1 gibt dem Steuerelement 6 die Impulse zur Inbetriebnahme des Leuchtelements 2. Je nach Verwendungszweck ist es sinnvoll, den Einschaltvorgang zu automatisieren. In diesem Fall wird mit Hilfe einer oder mehreren Photozellen 3, die bei Einsetzen der Dunkelheit dem Steuerelement 6 den Impuls gibt, das Leuchtelement 2 aktiviert. Wie beim Zeichnungsbeispiel können auch Taster 1 und Photozelle 3 kombiniert eingesetzt werden.

Das Leuchtelement 2 besteht aus einer beweglichen Leuchtfolie, die je nach Signalfunktion in verschiedenen Farben gewählt werden kann. Durch Flexibilität im Bereich der Stromerzeugung sowie der Lichtquelle durch Laminate, als auch eine Auswahl an verschiedenen Farben und Formen, können auch modische Aspekte berücksichtigt werden und somit kann der Einsatz auch im kommerziellen Modebereich erfolgen.

## Patentansprüche

1. Leuchte mit einer Anordnung aus Solarzellen, mindestens einem Akkumulator (5) und Leuchtelementen, die derartig betätigbar sind, dass bei Dunkelheit die im Akkumulator (5) gespeicherte Solarenergie an die Leuchtelemente abgegeben wird, **dadurch gekennzeichnet, dass** die Solarzellen auf eine bewegliche Folie aufgezogen sind und mindestens ein Solarzellenlaminat (4) bilden, dass die Leuchtelemente aus einer beweglichen Leuchtfolie (2) bestehen, und dass Solarzellenlaminat (4) und Leuchtfolie (2) zusammen eine flexibel aufbringbare Sicherheits- und Modesolarleuchte bilden.

2. Leuchte nach Anspruch 1, **dadurch gekennzeichnet, dass** die Aktivierung der Leuchte über einen Schnappschalter oder Taster (1) erfolgt.

3. Leuchte nach Anspruch 1, **dadurch gekennzeichnet, dass** die Aktivierung über mindestens eine Photozelle (3) erfolgt.

4. Leuchte nach Anspruch 2 oder 3, dass Taste (1) und/oder Photozelle (3) mit einem Steuerelement (6) verbunden sind, das die Leuchtfolie (2) aktiviert.

5. Verwendung einer Leuchte nach einem der Ansprüche 1 bis 4 zur Erhöhung der Sicherheit oder der visuellen Attraktivität für sämtliche Oberbekleidung, Helme sowie Kopfbedeckungen aller Art, Schutz- sowie Arbeitsbekleidung, Kostüme aller Art, tragbare Behälter und Taschen, Spielzeug sowie Kinderwagen.

6. Verwendung einer Leuchte nach einem der Ansprüche 1 bis 4 zur Erhöhung der Sicherheit oder der visuellen Attraktivität für Halsbänder bei Tieren, sowie Schutzdecken, Modeumhänge und Manschetten.

7. Verwendung einer Leuchte nach einem der Ansprüche 1 bis 4 zur Erhöhung der Sicherheit oder der visuellen Attraktivität oder auch zur Veredelung bei Land-, Luft- und Wasserfahrzeugen.

8. Verwendung einer Leuchte nach einem der Ansprüche 1 bis 4 zur Erhöhung der Sicherheit oder der visuellen Attraktivität von Beschilderungen und Signalisierungen im Strassenverkehr, in den Bergen und bei der Schiffahrt sowie anderen Aussenbeschilderungen.

## Claims

1. Lamp, having an arrangement of solar cells, at least one storage battery (5) and illuminating members which are actuatable in such a manner that, in the dark, the solar energy stored in the storage battery (5) is transmitted to the illuminating members, **characterised in that** the solar cells are attached to a displaceable foil and form at least one solar cell laminate (4), **in that** the illuminating members comprise a displaceable illuminating foil (2), and **in that** the solar cell laminate (4) and illuminating foil (2) together form a flexibly mountable safety and fashion solar lamp.

2. Lamp according to claim 1, **characterised in that** the activation of the lamp is effected via a snap switch or push-button key (1).

3. Lamp according to claim 1, **characterised in that** the activation is effected via at least one photoelectric cell (3).

4. Lamp according to claim 2 or 3, **characterised in that** key (1) and/or photoelectric cell (3) are/is connected to a control member (6), which activates the illuminating foil (2).

5. Use of a lamp, according to one of claims 1 to 4, for increasing the safety or the visual attractiveness for all outer clothing, helmets as well as head coverings of all types, protective clothing as well as workclothes, costumes of all types, portable containers and bags, toys and prams.

6. Use of a lamp, according to one of claims 1 to 4, for increasing the safety or the visual attractiveness of collars for animals, as well as protective covers, fashion wraps and sleeves.

7. Use of a lamp, according to one of claims 1 to 4, for increasing the safety or the visual attractiveness of land vehicles, aircraft and watercraft, or even for finishing such.

8. Use of a lamp, according to one of claims 1 to 4, for increasing the safety or the visual attractiveness of signs and signals for road-traffic purposes, in mines and for shipping as well as for other outside signs.

## Revendications

1. Éclairage comportant un agencement de cellules solaires, au moins un accumulateur (5) et des éléments d'éclairage, qui peuvent être commandés de telle sorte que, en cas d'obscurité, l'énergie solaire emmagasinée dans l'accumulateur (5) est cédée aux éléments d'éclairage, **caractérisé en ce que** les cellules solaires sont montées sur une feuille mobile et forment au moins un laminé de cellules solaires (4), que les éléments d'éclairage sont constitués d'une feuille lumineuse (2) mobile, et que le laminé de cellules solaires (4) et la feuille lumineuse (2) forment ensemble un éclairage solaire de sécurité et de mode applicable de manière flexible.

2. Éclairage suivant la revendication 1, **caractérisé en ce que** l'activation de l'éclairage est assurée par l'intermédiaire d'un interrupteur instantané ou d'un bouton-poussoir (1).

3. Éclairage suivant la revendication 1, **caractérisé en ce que** l'activation est assurée par l'intermédiaire d'au moins une cellule photoélectrique (3).

4. Éclairage suivant l'une des revendications 2 et 3, **caractérisé en ce que** le bouton-poussoir (1) et/ou la cellule photoélectrique (3) sont reliés à un élément de commande (6) qui active la feuille lumineuse (2).

5. Utilisation d'un éclairage suivant l'une des revendications 1 à 4 pour élever la sécurité ou l'attrait visuel pour tous les vêtements, casques, ainsi que couvre-chefs de toute sorte, vêtements de protection ainsi que de travail, costumes de toute sorte, récipients et sacs portatifs, jouets, ainsi que voitures d'enfants.

6. Utilisation d'un éclairage suivant l'une des revendications 1 à 4 pour élever la sécurité ou l'attrait visuel pour des colliers pour animaux, ainsi que pour des housses de protection, accessoires de mode et brassards.

7. Utilisation d'un éclairage suivant l'une des revendications 1 à 4 pour élever la sécurité ou l'attrait visuel ou également pour l'amélioration dans des véhicules routiers, aériens et nautiques.

8. Utilisation d'un éclairage suivant l'une des revendications 1 à 4 pour élever la sécurité ou l'attrait visuel de balisages et signalisations dans le trafic routier, dans les montagnes et dans la navigation, ainsi que d'autres signalisations extérieures.
